# EUROPEAN PATENT APPLICATION

(11) **EP 3 989 204 A1**
(43) Date of publication of application: **27.04.2022**
(21) Application number: 21201547.3
(22) Date of filing: 07.10.2021
(51) Int. Cl.: G08G 5/00, G01C 21/34, G08G 5/02

(54) **SYSTEM AND METHOD FOR GENERATING, SUPPLYING, AND IMPLEMENTING AN OPTIMIZED DESCENT APPROACH PROFILE FOR AN AIRCRAFT**

(30) Priority: 21.10.2020 IN 202011045858; 09.12.2020 US 202017115875
(71) Applicant: Honeywell International Inc., Charlotte, NC 28202 (US)
(72) Inventor: CHANDRASHEKARAPPA, Mohan, Charlotte, 28202 (US); NAGARAJA, Sridevi, Charlotte, 28202 (US); VENKATARAMANA, Kiran, Charlotte, 28202 (US); HEGDE, Satish, Charlotte, 28202 (US); SHAMASUNDAR, Raghu, Charlotte, 28202 (US)
(74) Representative: LKGlobal UK Ltd.

(57) **Abstract**

A system and method for generating, supplying, and implementing an optimized descent approach profile for an aircraft includes transmitting a current flight plan from an onboard flight management system (FMS) to an off-board computing device. The optimized descent approach profile for the aircraft is computed, in the off-board computing device,. One or more new waypoints or points of interest that are not on the current descent approach profile, but which comprise the optimized descent approach profile, are identified in the off-board computing device. The new waypoints or points of interest are transmitted from the off-board system to the onboard FMS. The current descent approach profile is updated, in the FMS, to include the new waypoints or points of interest, thereby generating an updated flight plan. The updated flight plan is implementing in the onboard FMS.

## Description

### CROSS REFERENCE TO RELATED APPLICATION

The present application claims benefit of prior filed Indian Provisional Patent Application No. 202011045858, filed October 21, 2020, which is hereby incorporated by reference herein in its entirety.

### TECHNICAL FIELD

The present invention generally relates to aircraft continuous descent approaches, and more particularly relates to a system and method for generating, supplying, and implementing an optimized descent approach profile for an aircraft.

### BACKGROUND

A continuous descent approach (CDA), also known as an optimized profile descent (OPD), is an aircraft descent approach that is designed to reduce fuel consumption, carbon emissions, and noise as compared to conventional descent approaches. More specifically, a CDA is a smooth, constant angle, near idle thrust, and low drag descent approach to a designated final approach fix or final approach point for landing. In contrast, a conventional descent approaches (or non-CDA) implements stair-step descent trajectories, which includes throttling down and decelerating on level segments, and then requesting permission to descend to each new (lower) altitude. A CDA starts from the top of descent (i.e. at cruise altitude) and allows the aircraft to fly an optimal, continuous descent vertical profile down to runway threshold.

As may be appreciated, CDA trajectories keep aircraft higher and at lower thrust for longer periods of time compared with conventional descent approaches, thereby reducing noise, fuel burn, and associated emissions. Indeed, U.S and European trials of advanced forms of CDA indicate that fuel burn and emissions can be reduced by as much as 10-20 percent during descent and approach, depending on the aircraft type and local airport conditions. Thus, it is desirable that most, if not all, aircraft include the capability to implement CDAs.

Some relatively newer flight management systems (FMSs) are presently configured to implement CDA, thereby enabling autopilot systems to fly the aircraft at idle thrust from cruise through landing. However, most legacy FMSs do not include the functionality. Upgrading the legacy FMSs to leverage the complete benefits of CDA would require relatively prolonged time periods and relatively high costs.

Hence, there is a need for a system and method that allows aircraft with existing, legacy FMSs to implement CDAs, and thereby reap the benefits of CDA. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a method of generating, supplying, and implementing an optimized descent approach profile for an aircraft includes transmitting a current flight plan from an onboard flight management system (FMS) to an off-board computing device, where the current flight plan includes a current descent approach profile. The optimized descent approach profile for the aircraft is computed, in the off-board computing device, wherein the optimized descent approach profile is a descent approach profile with a minimal number of level flight segments during aircraft descent from top of descent to a landing runway. One or more new waypoints or points of interest that are not on the current descent approach profile, but which comprise the optimized descent approach profile, are identified in the off-board computing device. The new waypoints or points of interest are transmitted from the off-board system to the onboard FMS. The current descent approach profile is updated, in the FMS, to include the new waypoints or points of interest, thereby generating an updated flight plan. The updated flight plan is implementing in the onboard FMS.

In another embodiment, an optimized descent approach profile system for an aircraft includes an off-board computing device and a flight management system (FMS). The off-board computing device is configured to: (i) compute an optimized descent approach profile for the aircraft, wherein the optimized descent approach profile is a descent approach profile with a minimal number of level flight segments during aircraft descent from top of descent to a landing runway, (ii) receive a current flight plan that includes at least a current descent approach profile for the aircraft, (iii) identify one or more new waypoints or points of interest that are not on the current descent approach profile, but which comprise the optimized descent approach profile, and (iv) transmit the one or more new waypoints or points of interest. The FMS is in operable communication with the off-board computing device and configured to: (i) transmit the current flight plan to the off-board computing device, (ii) receive the one or more new waypoints or points of interest from the off-board computing device, (iii) update the current descent approach profile to include the one or more new waypoints or points of interest, to thereby generate an updated flight plan, and (iv) implement the updated flight plan.

Furthermore, other desirable features and characteristics of the system and method for generating, supplying, and implementing an optimized descent approach profile for an aircraft will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of one embodiment of an optimized descent approach profile generation and supply system;
FIG. 2 depicts a functional block diagram of an alternative embodiment of an optimized descent approach profile generation and supply system;
FIG. 3 depicts a process, in flowchart form, that may be implemented by the optimized descent approach profile generation and supply system;
FIG. 4 depicts an example of a conventional descent approach profile; and
FIG. 5 depicts an example of how the conventional descent approach profile of FIG. 4 was modified to generate an optimized descent approach profile.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

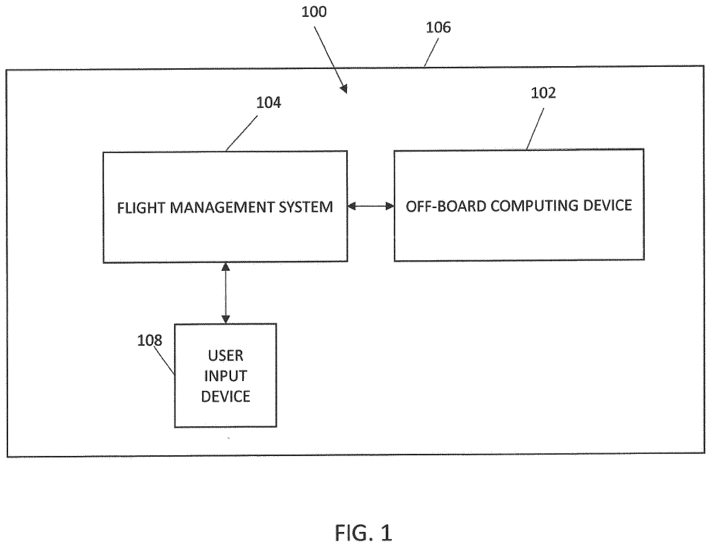

Referring to FIG. 1, one embodiment of an optimized descent approach profile generation and supply system 100 is depicted and includes an off-board computing device 102 and a flight management system (FMS) 104. The off-board computing device 102 is configured to compute an optimized descent approach profile for the aircraft 106. It should be noted that the term "off-board computing device" as used herein is defined as device, having one or more programmed processors, that is not fixedly mounted within the aircraft 106. That is, not part of the fixed cockpit hardware. Thus, while the embodiment depicted in FIG. 1 shows the entirety of the system 100 disposed within an aircraft 106, portions of the system 100 may be disposed in one or more portable devices that are readily transported into and removed from the aircraft 106. For example, the off-board computing device 102 may be a portable hand-held device, such as an electronic flight bag (EFB), a smartphone, a tablet computer, or a portable computer (e.g., laptop computer), just to name a few.

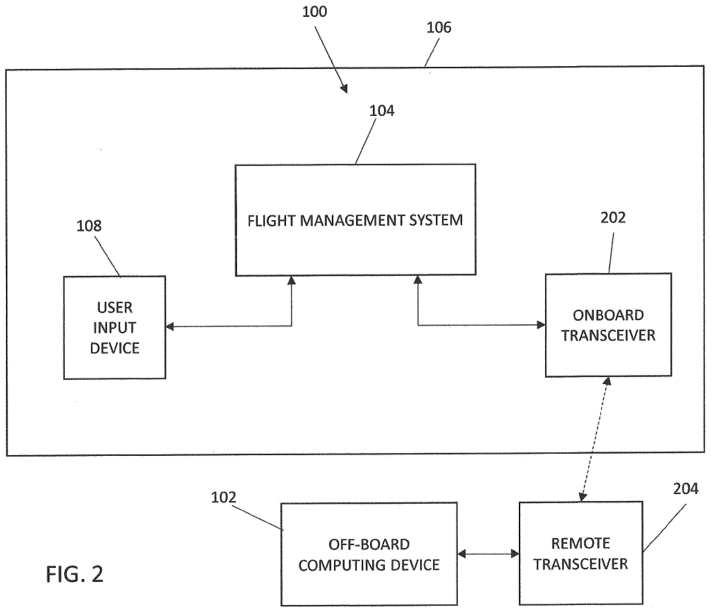

In other embodiments, as depicted in FIG. 2, the off-board computing device 102 may be permanently disposed separate and remote from the aircraft 106. For example, the off-board computing device 102 may be a ground-based computing device, which may be disposed at an air traffic control (ATC) center or at an Aeronautical Operational Control (AOC) center, or it may be a computing device on a remote aircraft that has CDA capabilities.

Whether implemented in a portable hand-held device or permanently disposed separate from the aircraft 106, the off-board computing device 102 generally represents the hardware, circuitry, processing logic, and/or other components configured to facilitate communications and/or interaction between the elements of the aircraft system 100 and perform additional processes, tasks and/or functions to support operation of the system 100, as described in greater detail below. Depending on the embodiment, the off-board computing device 102 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the off-board computing device 102 includes processing logic that may be configured to carry out the functions, techniques, and processing tasks associated with the operation of the system 100 described in greater detail below. Furthermore, the steps of a method or algorithm described in connection with the embodiments disclosed herein may be embodied directly in hardware, in firmware, in a software module executed by the off-board computing device 102, or in any practical combination thereof. In accordance with one or more embodiments, the off-board computing device 102 includes or otherwise accesses a data storage element, such as a memory (e.g., RAM memory, ROM memory, flash memory, registers, a hard disk, or the like) or another suitable non-transitory short or long term storage media capable of storing computer-executable programming instructions or other data for execution that, when read and executed by the off-board computing device 102, cause the off-board computing device 102 to execute and perform one or more of the processes, tasks, operations, and/or functions described herein.

Before proceeding further, it is additionally noted that the optimized descent approach profile that the off-board computing device 102 computes is defined as a descent approach profile with a minimal number of level flight segments during aircraft descent from top of descent to a landing runway. Preferably, the optimized descent approach profile will include no level flight segments, thought it may include one or more. In those instances where the optimized descent approach includes no level flight segments, the optimized descent approach may be a continuous straight line (i.e., has only one flight segment), or it may include two or more flight segments of differing slopes. As may be appreciated, the optimized descent approach may vary from one or more of aircraft-to-aircraft, aircraft type-to-aircraft type, airport-to-airport, and flight conditions-to-flight conditions, just to name a few factors.

Returning now to a description of the system 100, and regardless of the specific optimized descent approach that the off-board computing device 102 computes, it is additionally configured to receive a current flight plan from the aircraft 106 that includes at least a current descent approach profile for the aircraft 106. The off-board computing device 102, upon receipt of the current flight plan, identifies one or more new waypoints or points of interest that are not on the current descent approach profile, but which comprise the optimized descent approach profile it computed. The off-board computing device 102 is additionally configured to transmit the one or more new waypoints or points of interest back to the aircraft 106.

In one particular embodiment, the off-board computing device 102 implements the above-described functionality by comparing at least the current descent approach profile to the optimized descent approach profile, to identify the one or more new waypoints or points of interest. The off-board computing device 102 is additionally configured to extract any altitude, speed, lateral, and time constraints associated with each of the one or more new waypoints or points of interest, and to transmit the altitude, speed, lateral, and time constraints along with each of the new waypoints or points of interest to the FMS 104.

The FMS 104 is in operable communication with the off-board computing device 102. As is generally known, the FMS 104 is a specialized processing system that automates, among other things, the flight plan. The flight plan is generally determined on the ground before departure by either the pilot or a dispatcher for the aircraft flight crew. The flight plan, which comprises, but is not limited to, a set of aircraft data that is generally referred to as flight plan data, may be manually entered into the FMS 104 or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. Regardless of how the flight plan is entered, the FMS 104 receives and loads the flight plan, including a descent approach profile, into its working memory, and uses the current flight plan to automate the flight of the aircraft.

In addition to the general functionality described above, the FMS 104 is further configured to transmit the current flight plan to the off-board computing device 102 and to receive the one or more new waypoints or points of interest transmitted thereto from the off-board computing device 102. In this regard, and as FIG. 2 further depicts, when the off-board computing device 102 is disposed separate and remote from the aircraft 106, the system 100 may additionally include an onboard transceiver 202 that is configured to wirelessly transmit data to, and receive data from, a remote site or another aircraft. Moreover, the off-board computing device 102 will be in operable communication with a remote transceiver 204, at the remote site or other aircraft, that is configured to wirelessly transmit data to, and receive data from, the onboard transceiver 202.

Regardless of whether the one or more new waypoints or points of interest are received via the onboard transceiver 202, the FMS 104 is additionally configured, upon receipt of the one or more new waypoints or points of interest, to update the current descent approach profile to include the one or more new waypoints or points of interest, and thus generate an updated flight plan. The FMS 104, upon generating the updated flight plan, will then implement the updated flight plan.

The FMS 104 is preferably configured to transmit the current flight plan to the off-board computing device 102 in response to a triggering event. This triggering event may be an input supplied from the flight crew or it may be an automated event based on the current position of the aircraft 106. If the triggering event is an input supplied from the flight crew, it may be supplied via, for example, a user input device 108. Depending on the embodiment, the user input device 106 may be realized as a keypad, touchpad, keyboard, mouse, touch panel (or touchscreen), joystick, knob, line select key or another suitable device adapted to receive input from a user. If the triggering event is an automated event it may include the FMS 104 determining that the aircraft is at a predetermined position in the cruise phase of the current flight plan.

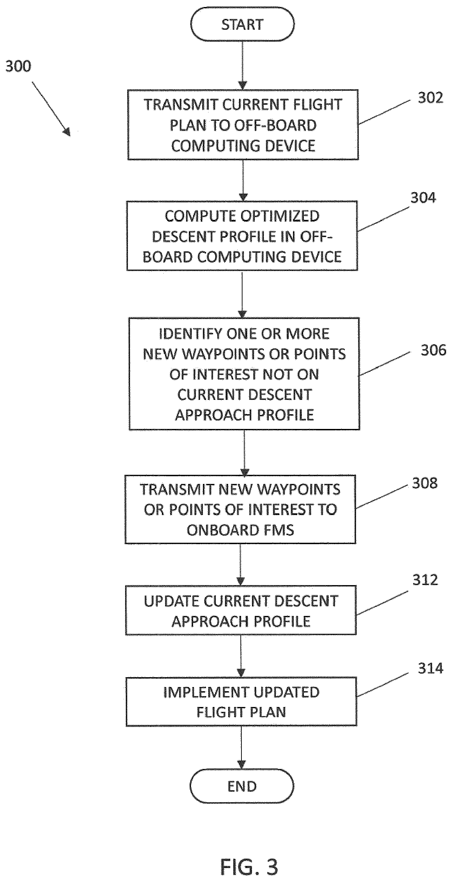

The system 100 described above implements a process for generating, supplying, and implementing an optimized descent approach profile. The process 300 is depicted in flowchart form in FIG. 3, and with reference thereto will now be described. In doing so, parenthetical reference numerals refer to like flowchart symbols in FIG. 3. It should be appreciated that the depicted process 300 may include any number of additional or alternative tasks, the tasks need not be performed in the illustrated order and/or the tasks may be performed concurrently, and/or the process 300 may be incorporated into a more comprehensive procedure or process having additional functionality not described in detail herein.

The depicted process 300 includes onboard FMS 104 transmitting the current flight plan to the off-board computing device 102 (302). The process 300 additionally includes the off-board computing device 102 computing the optimized descent approach profile for the aircraft 106 (304). The off-board computing device 102 identifies one or more new waypoints or points of interest that are not on the current descent approach profile, but which comprise the optimized descent approach profile (306), and transmits the new waypoints or points of interest to the onboard FMS 104 (308). The onboard FMS 104 updates the current descent approach profile to include the new waypoints or points of interest, thereby generating an updated flight plan (312), and then implements the updated flight plan (314).

It will be appreciated that the flight plan will not be updated in, and thus will not be implemented by, the onboard FMS 104, unless the flight crew in the aircraft 106 have received clearance from air traffic control (ATC) to implement the optimized descent profile. Thus, at some point during the process 300, but before the current flight plan is updated and implemented, ATC clearance for the optimized descent profile will need to be requested and received.

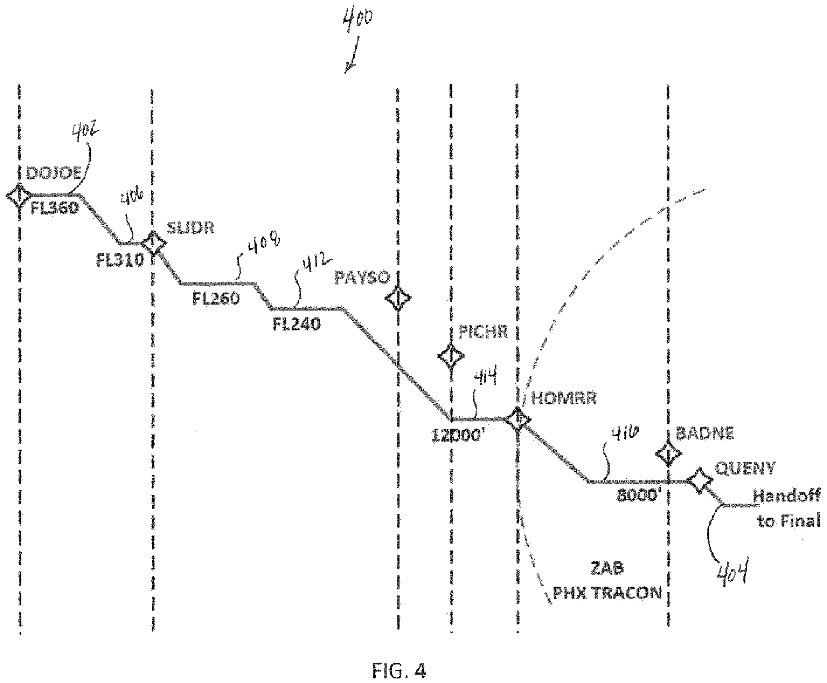

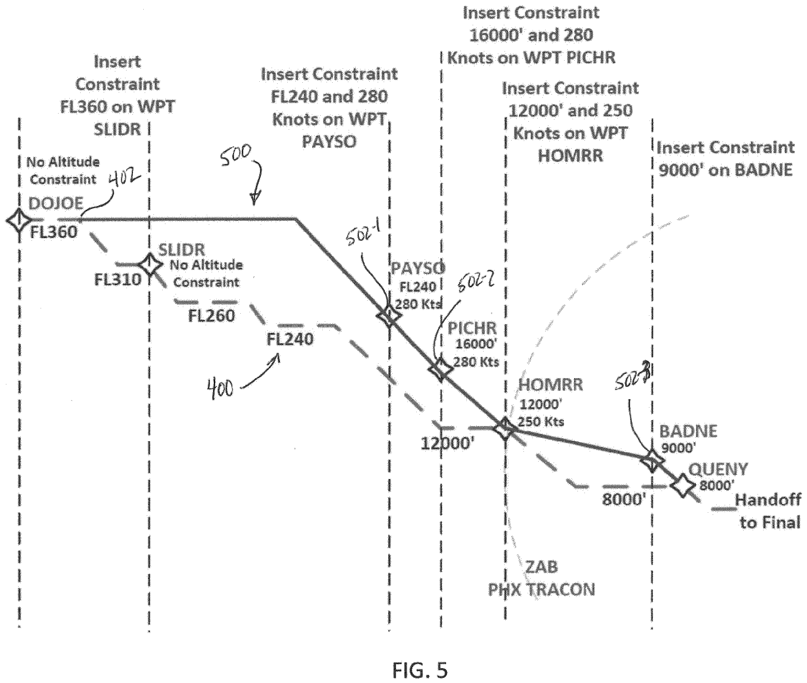

An example of a portion of the above process 300 is illustrated in FIGS. 4 and 5. In particular, FIG. 4 depicts a conventional step-down descent approach profile 400 that forms part of the current flight plan for the aircraft 106, and which was generated by the onboard FMS 104. This conventional descent approach profile 400 includes five level-off segments between the top of descent 402 and the final approach segment 404 ― one each at FL310 (31,000 ft.) 406, FL260 (26,000 ft.) 408, FL 240 (24,000 ft.) 412, 12,000 ft. 414, and 8,000 ft. 416. Thus, if the FMS 104 were to implement the conventional descent approach profile 400, the aircraft 106 would throttle down and decelerate at least five times during the descent, thereby increasing fuel burn and emissions.

In contrast, FIG. 5 depicts an example of an optimized descent approach profile 500 for the aircraft 106 that was computed in the off-board computing device 102. As depicted, the optimized descent approach profile 500 includes three new waypoints or points of interest 502-1, 502-2, 502-3, which were identified by the off-board computing device 102 and not on the current descent approach profile 400. Each of these new waypoints or points of interest has one or more associated constraints, which are extracted and applied to the new flight plan. For example, PAYSO 504-1 has an altitude constraint (FL240) and a speed constraint (280 knots), PICHR 504-2 has an altitude constraint (16,000 ft.) and a speed constraint (280 knots), BADNE 502-3 has only an altitude constraint (9,000 ft.). As FIG. 5 further depicts, the original waypoint SLIDR included no constraints, so the optimized descent approach profile inserted an altitude constraint of FL360 on that waypoint, which coincides with the top of descent 402.

The system and method described herein allow aircraft with existing, legacy FMSs to implement CDAs, and thereby reap the benefits of CDA. The system and method thus allow aircraft operators to realize the benefits of CDA operations without excessive system changes. The system and method also allow aircraft, airspace, and airports to realize the benefits of CDA operations without requiring dramatic changes to procedures and airspace designs and with minimal ATC facilitation and operational changes.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A generalpurpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computerimplemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An optimized descent approach profile system for an aircraft, comprising:
an off-board computing device configured to:
(i) compute an optimized descent approach profile for the aircraft, wherein the optimized descent approach profile is a descent approach profile with a minimal number of level flight segments during aircraft descent from top of descent to a landing runway,
(ii) receive a current flight plan that includes at least a current descent approach profile for the aircraft,
(iii) identify one or more new waypoints or points of interest that are not on the current descent approach profile, but which comprise the optimized descent approach profile, and
(iv) transmit the one or more new waypoints or points of interest;
and
a flight management system (FMS) in operable communication with the off-board computing device, the FMS configured to:
(i) transmit the current flight plan to the off-board computing device,
(ii) receive the one or more new waypoints or points of interest from the off-board computing device,
(iii) update the current descent approach profile to include the one or more new waypoints or points of interest, to thereby generate an updated flight plan, and
(iv) implement the updated flight plan.

2. The system of claim 1, wherein the off-board computing device is further configured to compare at least the current descent approach profile to the optimized descent approach profile, to thereby identify the one or more new waypoints or points of interest.

3. The system of claim 1, wherein the off-board computing device is further configured to:
extract any altitude, speed, lateral, and time constraints associated with each of the one or more new waypoints or points of interest; and
transmit the altitude, speed, lateral, and time constraints along with each of the new waypoints or points of interest to the FMS.

4. The system of claim 1, wherein the FMS is further configured to:
determine that a triggering event has occurred; and
transmit the current flight plan to the off-board computing device in response to determining that the triggering event has occurred.

5. The system of claim 4, wherein:
the current flight plan includes a cruise phase; and
the triggering event comprises the aircraft being at one or more positions in the cruise phase of the current flight plan.

6. The system of claim 1, wherein the off-board computing device comprises a portable hand-held device.

7. The system of claim 6, wherein the portable hand-held device is selected from the group consisting of an electronic flight bag (EFB), a smartphone, a tablet computer, and a portable computer.

8. The system of claim 1, wherein the off-board computing device is disposed remote from the aircraft.

9. The system of claim 8, wherein the off-board computing device is selected from the group consisting of ground-based computing device, and a computing device on a remote aircraft.

10. A method of generating, supplying, and implementing an optimized descent approach profile for an aircraft, the method comprising the steps of:
transmitting a current flight plan from an onboard flight management system (FMS) to an off-board computing device, the current flight plan including a current descent approach profile;
computing, in the off-board computing device, the optimized descent approach profile for the aircraft, wherein the optimized descent approach profile is a descent approach profile with a minimal number of level flight segments during aircraft descent from top of descent to a landing runway;
identifying, in the off-board computing device, one or more new waypoints or points of interest that are not on the current descent approach profile, but which comprise the optimized descent approach profile;
transmitting the new waypoints or points of interest from the off-board system to the onboard FMS;
updating, in the onboard FMS, the current descent approach profile to include the new waypoints or points of interest, thereby generating an updated flight plan; and
implementing, in the onboard FMS, the updated flight plan.

11. The method of claim 10, wherein the step of identifying comprises:
comparing, in the off-board computing device, at least the current descent approach profile to the optimized descent approach profile.

12. The method of claim 11, wherein:
the method further comprises extracting any altitude, speed, lateral, and time constraints associated with each of the one or more new waypoints or points of interest; and
the step of transmitting further comprises transmitting the altitude, speed, lateral, and time constraints along with each of the new waypoints or points of interest from the off-board system to the onboard FMS.

13. The method of claim 10, further comprising:
determining, in the onboard FMS, that a triggering event has occurred; and
transmitting the current flight plan from the onboard FMS to the off-board computing device in response to determining that the triggering event has occurred.

14. The method of claim 13, wherein:
the current flight plan includes a cruise phase; and
the triggering event comprises the aircraft being at one or more positions in the cruise phase of the current flight plan.
